# EUROPEAN PATENT APPLICATION

(11) **EP 4 776 382 A1**
(43) Date of publication of application: **15.07.2026**
(21) Application number: 24954587.2
(22) Date of filing: 15.11.2024
(51) Int. Cl.: H01M 10/613, H01M 50/593, H01M 50/533, H01M 10/653

(54) **BATTERY CELL AND BATTERY PACK**

(30) Priority: 31.10.2024 CN 202422656306 U
(71) Applicant: Eve Energy Co., Ltd, Huizhou, Guangdong 516006 (CN)
(72) Inventor: WU, Xiaojuan, Huizhou, Guangdong 516006 (CN); FENG, Yanqiang, Huizhou, Guangdong 516006 (CN); OU, Caixia, Huizhou, Guangdong 516006 (CN)
(74) Representative: Zhu, Puxing
(86) International application number: PCT/CN2024/132288
(87) International publication number: WO 2026/091188

(57) **Abstract**

The present application provides a single battery and a battery pack. The single battery includes a cell pack, a casing, an electrode, and a first thermal conductive adhesive. Specifically, the casing includes a shell and a cover plate, the cell pack is accommodated within the shell, and the cover plate is connected to and covers the shell to seal it. The electrode includes a pole and a lead that are electrically connected to each other, the pole is disposed on the cover plate, and an end of the lead away from the pole extends in a length direction of the cell pack and is electrically connected to the cell pack. The first thermal conductive adhesive is disposed between the lead and the inner surface of the shell.

## Description

This application claims priority to and the benefit of Chinese Patent Application No. 202422656306.4, filed on Oct. 31, 2024, the disclosure of which is incorporated herein by reference in its entirety.

### TECHNICAL FIELD

The present application relates to the field of battery technologies, and in particular, to a single battery and a battery pack.

### BACKGROUND

A single battery typically includes a casing and a cell pack housed within the casing. The cell pack is electrically connected to the poles on the surface of the casing through leads. The connection between the cell pack and the lead is one of the regions where the single battery experiences the most severe heat generation.

### SUMMARY

### TECHNICAL PROBLEM

Due to limitations in design and processing accuracy, a gap of approximately 1.0 to 1.5 mm commonly exists between the lead and the casing; this gap substantially impedes dissipation of heat from the connection between the cell pack and the lead, thereby increasing the risk of thermal runaway of the single battery.

### TECHNICAL SOLUTIONS

According to a first aspect, the present application provides a single battery, which includes a cell pack, a casing, an electrode, and a first thermal conductive adhesive. Specifically, the casing includes a shell and a cover plate, the cell pack is accommodated within the shell, and the cover plate is connected to and covers the shell to seal it. The electrode includes a pole and a lead that are electrically connected to each other, the pole is disposed on the cover plate, and an end of the lead away from the pole extends in a length direction of the cell pack and is electrically connected to the cell pack. The first thermal conductive adhesive is disposed between the lead and the inner surface of the shell.

According to a second aspect, the present application provides a battery pack, which includes the above-mentioned single battery.

### BENEFICIAL EFFECTS

The beneficial effects provided by the present application are as follows: The cell pack is accommodated within the shell, and the current from the cell pack is conducted to the pole on the cover plate through the lead, thereby facilitating connection with external devices. The first thermal conductive adhesive is disposed between the lead and the shell, allowing heat from the lead to be rapidly transferred to the shell and dissipated, thereby effectively improving the heat dissipation efficiency of the cell pack.

In the single battery of the related art, due to manufacturing process and design limitations, a gap of approximately 1.0 to 1.5 mm typically exists between the lead and the casing. This gap significantly impedes heat transfer from the lead to the casing, consequently making it difficult to dissipate heat from the cell pack. In the single battery provided by the present application, heat from the cell pack can be rapidly transferred outward to the casing through the lead and the first thermal conductive adhesive and then dissipated into the environment, thereby substantially reducing the risk of thermal runaway of the cell pack in the single battery.

### BRIEF DESCRIPTION OF THE DRAWINGS

FIG. 1 is a schematic diagram illustrating the overall structure of a single battery according to some embodiments of the present application.
FIG. 2 is a schematic cross-sectional view of the single battery according to some embodiments of the present application.
FIG. 3 is a partial enlarged view of region A in FIG. 2.
FIG. 4 is a partial enlarged view of region B in FIG. 2.
FIG. 5 is a schematic diagram illustrating the fitting between the lead and the cell pack according to some embodiments of the present application.
FIG. 6 is a schematic cross-sectional view of the fitting structure in FIG. 5.
FIG. 7 is a schematic diagram illustrating the fitting of an insulating thermal conductive film with the cell pack and the lead according to some embodiments of the present application.

### Description of reference numerals:

10, cell pack; 11, pack body; 12, tab; 20, casing; 21, shell; 22, cover plate; 221, first pole hole; 30, electrode; 31, pole; 32, lead; 321, first lead; 322, second lead; 323, third lead; 324, bent portion; 41, first thermal conductive adhesive; 42, second thermal conductive adhesive; 50, insulating bracket; 51, insulating gasket; 52, second pole hole; 53, thermal conductive hole; 60, thermal conductive sheet; 61, first thermal conductive sheet; 62, second thermal conductive sheet; 63, third pole hole; 70, thermal sensor; 80, insulating thermal conductive film.

### Embodiments of the present application

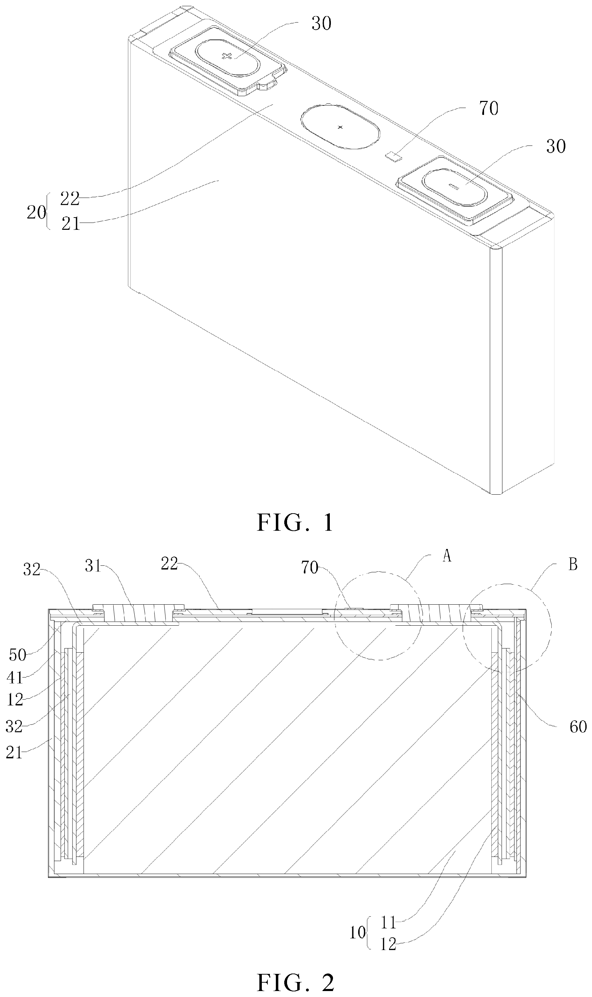

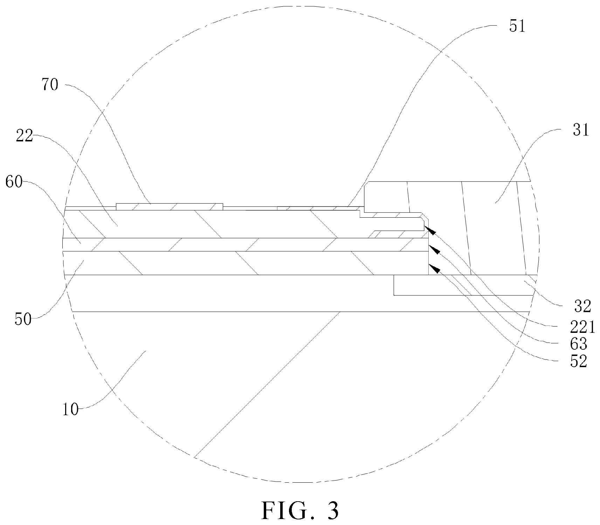

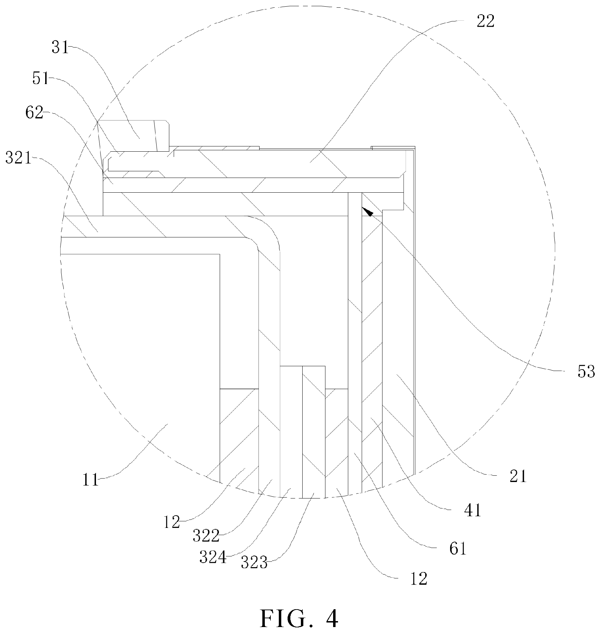

Please refer to FIGs. 1 to 4. FIG. 1 is a schematic diagram illustrating the overall structure of a single battery according to some embodiments of the present application. FIG. 2 is a schematic cross-sectional view of the single battery according to some embodiments of the present application. FIG. 3 is a partial enlarged view of region A in FIG. 2. FIG. 4 is a partial enlarged view of region B in FIG. 2.

Some embodiments of the present application provide a single battery, which includes a cell pack 10, a casing 20, electrodes 30, and a first thermal conductive adhesive 41. Specifically, the casing 20 includes a shell 21 and a cover plate 22. The cell pack 10 is accommodated within the shell 21. The cover plate 22 is connected to and covers the shell 21 to seal it. The electrode 30 includes a pole 31 and a lead 32 that are electrically connected to each other. The pole 31 is disposed on the cover plate 22. An end of the lead 32 away from the pole 31 extends in a length direction of the cell pack 10 and is electrically connected to the cell pack 10. The first thermal conductive adhesive 41 is disposed between the lead 32 and the inner surface of the shell 21.

In the embodiments of the present application, the current from the cell pack 10 is conducted to the pole 31 through the lead 32, facilitating communication with upstream and downstream equipment. The heat from the cell pack 10 is transferred to the casing 20 and dissipated into the environment either directly through the lead 32 and the first thermal conductive adhesive 41 or directly through the first thermal conductive adhesive 41. Compared to the single battery in related art where there is a gap between the lead 32 and the casing 20, the cell pack 10 provided in the embodiments of the present application can dissipate heat more rapidly. Therefore, the technical solution of the embodiments of the present application can effectively reduce the risk of thermal runaway in the single battery.

Exemplarily, each single battery is provided with two electrodes 30. Two leads 32 are electrically connected to both ends of the cell pack 10 respectively, subsequently guiding the current to the two poles 31 of the positive and negative electrodes. Of course, in some other embodiments, there may be only one electrode 30, with the other electrode of the cell pack 10 conducting with the casing 20 to serve as the other electrode of the single battery, which cannot limit the protection scope of the present application.

Specifically, the single battery further includes an insulating gasket 51. The cover plate 22 is provided with a first pole hole 221 for the pole 31 to pass through. The insulating gasket 51 is clamped within the first pole hole 221, and the pole 31 passes through the insulating gasket 51 and the first pole hole 221. The insulating gasket 51 is used to achieve electrical isolation between the pole 31 and the cover plate 22.

Optionally, the lead 32 and the pole 31 may be fixed after being in planar contact. In certain embodiments, a mating groove can also be provided on the lead 32, with part of the pole 31 inserted into the mating groove to increase the contact area between the pole 31 and the lead 32.

In some embodiments, the lead 32 includes a first lead 321 and a second lead 322 that are connected by bending relative to each other. The first lead 321 is electrically connected to the pole 31, and the second lead 322 is electrically connected to the cell pack 10. The first thermal conductive adhesive 41 is disposed between the second lead 322 and the inner surface of the shell 21.

Specifically, as shown in the figure, the upper side is defined as the upper surface of the cell pack 10, and adjacent to the upper surface is the side surface of the cell pack 10. The first lead 321 is disposed close to the upper surface of the cell pack 10, while the second lead 322 is disposed close to the side surface of the cell pack 10. The connection between the first lead 321 and the second lead 322 spans an edge of the cell pack 10.

In the operation of a single battery, there are typically two regions where heat is concentrated: one is the connection between the lead 32 and the cell pack 10, and the other is the pole 31. If these two heat sources are too close to each other, it may degrade the heat dissipation performance of the single battery. Therefore, in the embodiments of the present application, the lead 32 includes the first lead 321 and the second lead 322, with the first lead 321 and the second lead 322 located on different surfaces of the cell pack 10. This increases the distance between the two heat sources, preventing heat accumulation caused by concentrated heat sources.

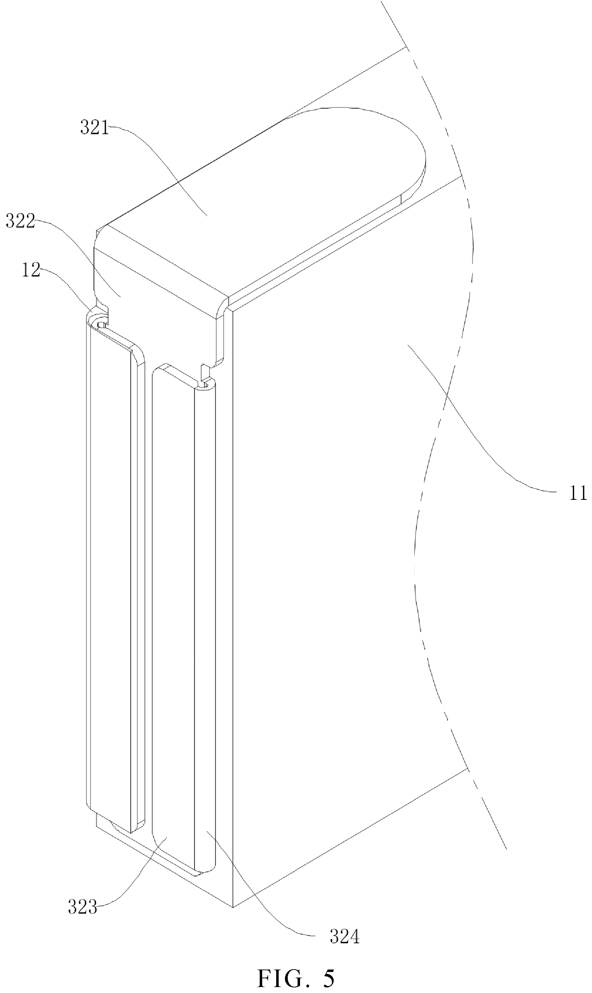

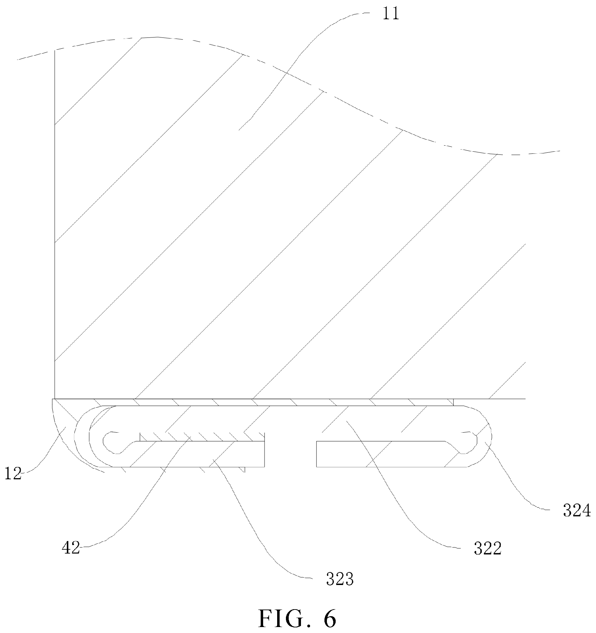

Please refer to FIG. 5 and FIG. 6. FIG. 5 is a schematic diagram illustrating the fitting between the lead 32 and the cell pack 10 according to some embodiments of the present application. FIG. 6 is a schematic cross-sectional view of the fitting structure in FIG. 5.

Optionally, the lead 32 further includes a third lead 323 electrically connected to the second lead 322. The third lead 323 is located on a side of the second lead 322 that is away from the cell pack 10. The cell pack 10 includes a pack body 11 and a tab 12. The pack body 11 is connected to the lead 32 through the tab 12. The tab 12 is wound around the second lead 322 and the third lead 323, and is electrically connected to both the second lead 322 and the third lead 323. The first thermal conductive adhesive 41 is disposed between the tab 12 and the inner surface of the shell 21. Specifically, the opposite sides of the first thermal conductive adhesive 41 are respectively in contact with the inner surface of the shell 21 and the tab 12.

The tab 12 serves as the hub for current output from the cell pack 10 and carries a high energy density during the operation of the single battery. On one hand, the tab 12, wound around the second lead 322 and the third lead 323, increases the current-carrying area, reduces energy density, and alleviates the heating phenomenon of the tab 12. On the other hand, the tab 12 is in direct contact with the first thermal conductive adhesive 41. Compared to the technical solution where the tab 12 transfers heat indirectly through the lead 32 and the second thermal conductive adhesive 42, the tab 12 in the embodiments of the present application can transfer heat outward more quickly, offering better heat dissipation performance.

It should be noted that two third lead 323 are provided in the figure, and the two third lead 323 are folded from opposite sides of the second lead 322, respectively. The tab 12 can be wound around one of the third leads 323 or both, depending on actual requirements. For single batteries with lower current-carrying pressure, the single-sided winding design shown in the figure is more conducive to production.

Optionally, the two opposing surfaces of the second lead 322 and the third lead 323 are parallel to each other, and a bent portion 324 is formed between the second lead 322 and the third lead 323. The thickness of the bent portion 324 is less than each of the thickness of the second lead 322 and the thickness of the third lead 323.

The reduced thickness of the bent portion 324 facilitates easier processing of the relative shapes of the second lead 322 and the third lead 323, making it less prone to tearing during bending operations. Additionally, after processing, the bent portion 324 exhibits minimal shape rebound, which is advantageous for mass production.

Exemplarily, the single battery further includes a second thermal conductive adhesive 42. There is a gap between the two opposing surfaces of the second lead 322 and the third lead 323, and this gap is filled with the second thermal conductive adhesive 42.

In actual operation, due to differences in heat dissipation conditions, the temperature of the tab 12 close to the second lead 322 is higher than the temperature of the tab 12 close to the third lead 323. Similarly, the temperature of the second lead 322 is higher than the temperature of the third lead 323. Therefore, designing the second thermal conductive adhesive 42 between the second lead 322 and the third lead 323 helps to transfer heat from the second lead 322 outward more quickly, optimizing the heat dissipation performance of the single battery.

In some embodiments, the single battery further includes an insulating bracket 50 and a thermal conductive sheet 60. The insulating bracket 50 is disposed between the cell pack 10 and the cover plate 22, and the insulating bracket 50 is provided with a thermal conductive hole 53. The thermal conductive sheet 60 is connected to one side of the cell pack 10 in the length direction and extends through the thermal conductive hole 53 to reach between the insulating bracket 50 and the cover plate 22. Correspondingly, the insulating bracket 50 is provided with a second pole hole 52, and the thermal conductive sheet 60 is provided with a third pole hole 63. The pole 31 passes through the second pole hole 52 and the third pole hole 63, and the pole 31 is insulated from the thermal conductive sheet 60 and the insulating bracket 50.

Considering production costs, the thermal conductive sheet 60 may be an integrally formed L-shaped structure or may be formed by connecting two separate components. Specifically, the thermal conductive sheet 60 includes a first thermal conductive sheet 61 and a second thermal conductive sheet 62 that are interconnected. The first thermal conductive sheet 61 passes through the thermal conductive hole 53 and extends between the lead 32 and the shell 21, while the second thermal conductive sheet 62 extends between the insulating bracket 50 and the cover plate 22.

The arrangement of the thermal conductive sheet 60 opens up a channel for heat dissipation. This is particularly beneficial in embodiments where the insulating bracket 50 is added, as heat is difficult to penetrate through the insulating bracket 50. This results in the temperature of the cover plate 22 being significantly lower than the temperature of the shell 21. The thermal conductive sheet 60 facilitates the transfer of the temperature of the cell pack 10 to the cover plate 22, utilizing the low-temperature region of the cover plate 22 to enhance the heat dissipation efficiency of the single battery.

Optionally, the single battery further includes a thermal sensor 70 that is attached to the cover plate 22.

The thermal sensor 70 is arranged on the cover plate 22, allowing it to detect the temperature of the cell pack 10 and to monitor the temperature of the pole 31 more sensitively, providing more timely feedback in case of unexpected situations. The arrangement of the thermal conductive sheet 60 also enhances the accuracy of the temperature detection by the thermal sensor 70.

Optionally, in the direction perpendicular to the cover plate 22, the projection of the thermal sensor 70 on the cover plate 22 falls within the projection range of the thermal conductive sheet 60 on the cover plate 22.

Since the thermal conductive sheet 60 can transfer the heat from the cell pack 10 to the cover plate 22, it can accurately reflect the real-time temperature of the cell pack 10. The projection of the thermal sensor 70 on the cover plate 22 falling within the projection range of the thermal conductive sheet 60 ensures that the temperature measured by the thermal sensor 70 closely approximates the actual temperature of the thermal conductive sheet 60.

In some embodiments, the thickness of the first thermal conductive adhesive 41 ranges from 0.3 mm to 1 mm.

Compared to a gap of 1.0 mm to 1.5 mm between the lead 32 and the casing 20 in the related art, which arises due to design and manufacturing limitations, in the embodiments of the present application, the opposite sides of the first thermal conductive adhesive 41 can abut against the lead 32 and the casing 20, respectively. A thickness of 0.3 mm to 1.0 mm not only meets the functional requirements but also accommodates the common machining precision in the current technical field, resulting in a more compact structure for the single battery.

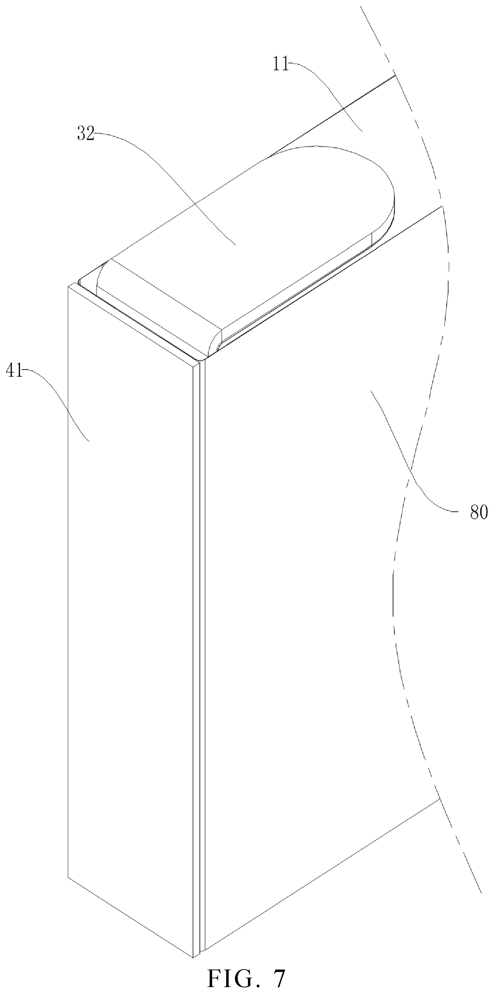

Please refer to FIG. 7, which is a schematic diagram illustrating the fitting of the insulating thermal conductive film 80 with the cell pack 10 and the lead 32 according to some embodiments of the present application.

In some embodiments, the single battery further includes an insulating thermal conductive film 80, which is wrapped around the cell pack 10 and part of the lead 32 to achieve electrical isolation between the lead 32 and the shell 21. The insulating thermal conductive film 80 may be disposed between the lead 32 and the first thermal conductive adhesive 41, or it can be attached to the inner wall of the shell 21. The arrangement of the insulating thermal conductive film 80 enhances the safety of the single battery without compromising thermal conductivity.

The battery units in all the above embodiments may include, but are not limited to, lithium-ion secondary battery units, lithium-ion primary battery units, lithium-sulfur battery units, sodium-lithium-ion battery units, sodium-ion battery units, or magnesium-ion battery units. The embodiments of the present application are not limited to these. The battery unit may be cylindrical, prismatic, pouch-type, or of other shapes. The figures illustrate pouch-type battery for ease of assembly, but are not limited to this configuration.

Embodiments of the present application further provide a battery pack, which includes the single battery provided in any one of the above embodiments.

The battery pack mentioned in the embodiments of the present application refers to a physical module including one or more battery units to provide higher voltage and capacity. The plurality of battery units may be connected in series, in parallel, or in a series-parallel combination. A series-parallel combination refers to a configuration where some of the battery units are connected in series and others are connected in parallel. The plurality of battery units may be directly connected in series, in parallel, or in a series-parallel combination to form an assembly, which is then accommodated within a housing. Alternatively, the battery pack may be configured such that a plurality of battery units are first connected in series, in parallel, or in a series-parallel combination to form battery modules, and then a plurality of such battery modules are connected in series, in parallel, or in a series-parallel combination to form an assembly, which is accommodated within a housing. This housing serves to prevent liquids or other foreign matter from affecting the charging or discharging of the battery units.

The battery pack may include a plurality of battery units and may further include other structures. For example, the battery pack may further include a busbar. Electrical connection among the plurality of battery units may be achieved through the busbar to realize their series, parallel, or series-parallel combination. The busbar may be made from a metal conductor, such as copper, iron, aluminum, stainless steel, aluminum alloy, etc.

The battery pack includes the battery unit as provided in any one of the above embodiments. Consequently, the battery pack of the embodiments of the present application also possesses the technical effects of the aforementioned battery unit. That is, the battery pack in the embodiments of the present application exhibits excellent heat dissipation performance, which can reduce the risk of thermal runaway of the battery pack to a certain extent.

## Claims

1. A single battery, comprising:
a cell pack;
a casing comprising a shell and a cover plate, wherein the cell pack is accommodated within the shell, and the cover plate is connected to and covers the shell to seal the shell;
an electrode, wherein the electrode comprises a pole and a lead electrically connected to each other, the pole is disposed on the cover plate, and an end of the lead away from the pole extends in a length direction of the cell pack and is electrically connected to the cell pack; and
a first thermal conductive adhesive disposed between the lead and an inner surface of the shell.

2. The single battery according to claim 1, wherein the lead comprises a first lead and a second lead connected in a bent manner, the first lead is electrically connected to the pole, the second lead is electrically connected to the cell pack, and the first thermal conductive adhesive is disposed between the second lead and the inner surface of the shell.

3. The single battery according to claim 2, wherein the lead further comprises a third lead electrically connected to the second lead, and the third lead is located on a side of the second lead facing away from the cell pack; and
wherein the cell pack comprises a pack body and a tab, the pack body is connected to the lead through the tab, the tab is wound around the second lead and the third lead, the tab is electrically connected to both the second lead and the third lead, and the first thermal conductive adhesive is disposed between the tab and the inner surface of the shell.

4. The single battery according to claim 3, wherein a surface of the second lead and a surface of the third lead opposite to each other are parallel, a bent portion is formed between the second lead and the third lead, and a thickness of the bent portion is less than each of a thickness of the second lead and a thickness of the third lead.

5. The single battery according to claim 3, further comprising a second thermal conductive adhesive, wherein a gap is formed between the surface of the second lead and the surface of the third lead opposite to each other, and the gap is filled with the second thermal conductive adhesive.

6. The single battery according to any one of claims 1 to 5, further comprising:
an insulating bracket, wherein the insulating bracket is disposed between the cell pack and the cover plate, and the insulating bracket is provided with a thermal conductive hole; and
a thermal conductive sheet, wherein the thermal conductive sheet is connected to a side of the cell pack in a length direction of the cell pack and extends through the thermal conductive hole, and the thermal conductive sheet is disposed between the insulating bracket and the cover plate.

7. The single battery according to claim 6, further comprising a thermal sensor attached to the cover plate.

8. The single battery according to claim 7, wherein in a direction perpendicular to the cover plate, a projection of the thermal sensor on the cover plate falls within a projection of the thermal conductive sheet on the cover plate.

9. The single battery according to any one of claims 1 to 5, wherein the first thermal conductive adhesive has a thickness of 0.3 mm to 1 mm.

10. The single battery according to any one of claims 1 to 5, further comprising an insulating thermal conductive film, wherein the insulating thermal conductive film is wound around the cell pack and a part of the lead to achieve electrical isolation between the lead and the shell.

11. A battery pack, comprising the single battery as claimed in any one of claims 1 to 10.
